# EUROPEAN PATENT SPECIFICATION

(11) **EP 3 862 895 B1**
(45) Date of publication and mention of the grant of the patent: **16.08.2023**
(21) Application number: 18936197.5
(22) Date of filing: 03.10.2018
(51) Int. Cl.: G06F 21/32, G06T 7/00

(54) **BIOMETRIC AUTHENTICATION DEVICE, BIOMETRIC AUTHENTICATION METHOD, AND BIOMETRIC AUTHENTICATION PROGRAM**
VORRICHTUNG ZUR BIOMETRISCHEN AUTHENTIFIZIERUNG, VERFAHREN ZUR BIOMETRISCHEN AUTHENTIFIZIERUNG UND PROGRAMM ZUR BIOMETRISCHEN AUTHENTIFIZIERUNG
DISPOSITIF D'AUTHENTIFICATION BIOMÉTRIQUE, PROCÉDÉ D'AUTHENTIFICATION BIOMÉTRIQUE ET PROGRAMME D'AUTHENTIFICATION BIOMÉTRIQUE

(43) Date of publication of application: 11.08.2021
(73) Proprietor: FUJITSU LIMITED, Kanagawa 211-8588 (JP)
(72) Inventor: SEMBA, Satoshi, Kawasaki-shi, Kanagawa 211-8588 (JP); ABE, Narishige, Kawasaki-shi, Kanagawa 211-8588 (JP); YAMADA, Shigefumi, Kawasaki-shi, Kanagawa 211-8588 (JP); MATSUNAMI, Tomoaki, Kawasaki-shi, Kanagawa 211-8588 (JP); UNO, Kazuya, Kawasaki-shi, Kanagawa 211-8588 (JP); TAKAGI, Junji, Kawasaki-shi, Kanagawa 211-8588 (JP); UCHIDA, Hidetsugu, Kawasaki-shi, Kanagawa 211-8588 (JP)
(74) Representative: Hoffmann Eitle
(86) International application number: PCT/JP2018/037012
(87) International publication number: WO 2020/070821

(56) References cited:
- JP-A- H09 305 767
- JP-A- 2011 210 030
- JP-A- 2018 116 353
- VILDJIOUNAITE E ET AL: "Empirical evaluation of combining unobtrusiveness and security requirements in multimodal biometric systems", IMAGE AND VISION COMPUTING, ELSEVIER, GUILDFORD, GB, vol. 27, no. 3, 2 February 2009 (2009-02-02), pages 279-292, XP025685238, ISSN: 0262-8856, DOI: 10.1016/J.IMAVIS.2007.12.001 [retrieved on 2007-12-25]
- ALEKSIC P S ET AL: "Audio-Visual Biometrics", PROCEEDINGS OF THE IEEE, IEEE. NEW YORK, US, vol. 93, no. 11, 1 November 2006 (2006-11-01), pages 2025-2044, XP011183727, ISSN: 0018-9219
- WENYI ZHAO, RAMA CHELLAPPA: "Face Processing: Advanced Modeling and Methods", ELSEVIER, 28 December 2005 (2005-12-28), XP040425638, Academic Press ISBN: 9780080488844

## Description

### TECHNICAL FIELD

The present invention relates to a biometric authentication device, a biometric authentication method, and a biometric authentication program.

### BACKGROUND ART

At an automated teller machine and a kiosk terminal, an individual may be authenticated using biometric authentication technology. With the biometric authentication technology, a customer does not require to remember a password used for password authentication, so that it is possible to enhance the convenience of the customer.

In the biometric authentication technology, biometric information that characterizes an individual's living body is acquired, the acquired biometric information is collated with biometric information of a plurality of persons registered in a database, and the authentication succeeds when both biometric information match. However, in this method, there is a problem that it takes time to perform the authentication because it is required to search the biometric information of all persons registered in the database.

Therefore, various proposals for performing authentication at a high speed have been made.

For example, a method has been proposed in which candidates are narrowed down to some extent by using biometric information whose data amount is small, and then a candidate is specified as one person by using biometric information whose data amount is large (see, for example, Patent Document 1).

In addition, a method of changing an algorithm for authentication according to nationality, gender, and age of a person has also been proposed (see, for example, Patent Document 2).

In the paper entitled "Empirical evaluation of combining unobtrusiveness and security requirements in multimodal biometric systems", Elena Vildjiounaite et al. disclose a cascaded multimodal biometric system, which first performs unobtrusive user authentication and requires explicit interaction only when the unobtrusive authentication fails.

In the paper entitled "Audio-Visual Biometrics", Petar S. Aleksic et al. disclose the main components of audio-visual biometric systems, review existing systems including corpora commonly used for AV person recognition research and their performance, and discuss future research and development directions in this area.

In "Face Processing: Advanced Modelling and Methods", Wenyi Zhao et al. disclose aspects of design of multimodal biometric systems including architecture, choice of biometric modalities, level of fusion and fusion strategies, and normalization techniques and describe examples of such systems.

### CITATION LIST

### PATENT DOCUMENT

Patent Document 1: Japanese Laid-open Patent Publication No. 2007-156790
Patent Document 2: Japanese Laid-open Patent Publication No. 2017-162010

### SUMMARY OF INVENTION

### TECHNICAL PROBLEM

However, in these methods, the biometric information possessed by the living body is not fully utilized, and the excellent discrimination accuracy that the biometric authentication has is impaired.

An object of the present invention is to provide a biometric authentication device, a biometric authentication method, and a biometric authentication program capable of performing authentication at a high speed.

### SOLUTION TO PROBLEM

The appended claims define the scope of protection. Any examples and technical descriptions of apparatuses, products and/or methods in the description and/or drawings not covered by the claims are presented not as embodiments of the invention but as background art or examples useful for understanding the invention. J

The present invention provides a biometric authentication device, in accordance with claim 1 The present invention also provides a biometric authentication method, in accordance with claim 6.

The present invention also provides a biometric authentication program, in accordance with claim 7.

### ADVANTAGEOUS EFFECTS OF INVENTION

According to the aspect, it is possible to perform authentication at high speed.

### BRIEF DESCRIPTION OF DRAWINGS

FIG. 1 is a schematic diagram illustrating an overall configuration of a biometric authentication device according to the present embodiment.
FIG. 2 is a hardware configuration diagram of an authentication server according to the present embodiment.
FIG. 3 is a hardware configuration diagram of an individual authentication device according to the present embodiment.
FIG. 4 is a functional configuration diagram of a biometric authentication device according to the present embodiment.
FIG. 5A is a diagram illustrating an example of a waiting line seen from a camera in the present embodiment, and FIG. 5B is a diagram illustrating an example of an image acquired by an image acquisition unit in a case illustrated in FIG. 5A in the present embodiment.
FIG. 6A is a diagram illustrating another example of a waiting line seen from a camera in the present embodiment, and FIG. 6B is a diagram illustrating an example of an image acquired by the image acquisition unit in a case illustrated in FIG. 6A in the present embodiment.
FIG. 7 is a flowchart (No. 1) illustrating a biometric authentication method according to the present embodiment.
FIG. 8 is a flowchart (No. 2) illustrating the biometric authentication method according to the present embodiment.
FIG. 9 is a flowchart (No. 3) illustrating the biometric authentication method according to the present embodiment.
FIG. 10 is a flowchart (No. 4) illustrating the biometric authentication method according to the present embodiment.

### DESCRIPTION OF EMBODIMENTS

Hereinafter, the present embodiment will be described with reference to the attached drawings.

### <Overall configuration>

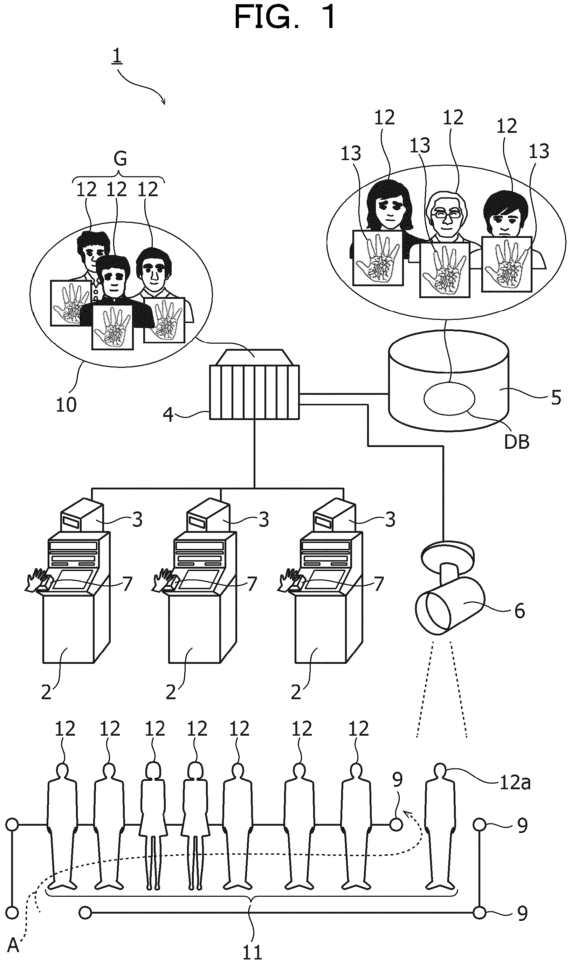

FIG. 1 is a schematic diagram illustrating an overall configuration of a biometric authentication device according to the present embodiment.

In the present embodiment, it is assumed that a waiting line 11 of a plurality of persons 12 has formed at a bank, a store, and the like, and each person 12 is authenticated by a biometric authentication device 1 as described later. Note that it is assumed that each person 12 walks along an arrow A in an area regulated by a pole 9.

The biometric authentication device 1 includes an operation terminal 2, an individual authentication device 3, an authentication server 4, a storage unit 5, and a camera 6.

Among these, the operation terminal 2 is, for example, an automated teller machine or a kiosk terminal. The number of operation terminals 2 to be installed is not particularly limited, and only one operation terminal 2 may be installed or a plurality of operation terminals 2 may be installed. In addition, each operation terminal 2 is provided with a vein sensor as a biometric sensor 7 that acquires biometric information 13 of each person 12. The vein sensor is a device that acquires a vein pattern in the palm of a person.

The individual authentication device 3 is a device that authenticates an individual based on the biometric information acquired by the biometric sensor 7 and is connected to the authentication server 4 via a network such as a local area network (LAN).

The authentication server 4 is a computer that narrows down candidates for persons to be authenticated prior to authentication by the individual authentication device 3. In this example, a shared memory 10 is provided in the authentication server 4. The shared memory 10 is a volatile memory such as a dynamic random access memory (DRAM) and stores a group G of the narrowed down person 12.

On the other hand, the storage unit 5 is hardware that stores a biometric information database DB. In the biometric information database DB, feature indicating characteristics of faces of all persons 12 who are permitted to perform a transaction by the operation terminal 2 and biometric information 13 of each person are stored. The hardware used as the storage unit 5 is not particularly limited, and a non-volatile storage device such as a hard disk drive and a solid state drive (SSD) may be provided as the storage unit 5, or a volatile storage device such as the DRAM may be provided as the storage unit 5.

In addition, the camera 6 faces the head person 12a of the waiting line 11 and captures a still image of the head person 12a and its surroundings.

### <Hardware configuration>

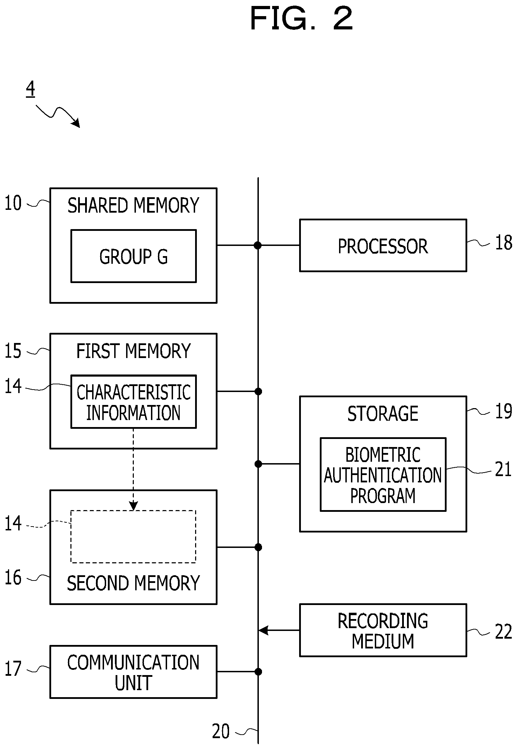

FIG. 2 is a hardware configuration diagram of the authentication server 4.

As illustrated in FIG. 2, the authentication server 4 includes a shared memory 10, a first memory 15, a second memory 16, a communication unit 17, a processor 18, and a storage 19. Each of these units are connected to each other via a bus 20.

Among these, the storage 19 is a non-volatile storage device such as a flash memory and stores a biometric authentication program 21 according to the present embodiment.

Note that the biometric authentication program 21 may be recorded in a computer-readable recording medium 22 and the processor 18 may read the biometric authentication program 21 in the recording medium 22.

As the recording medium 22 described above, for example, physically portable recording media such as a compact disc read only memory (CD-ROM), a digital versatile disc (DVD), and a universal serial bus (USB) memory are included. In addition, a semiconductor memory such as the flash memory or the hard disk drive may be used as the recording medium 22. The recording medium 22 is not a temporary medium such as a carrier wave having no physical form.

Further, the biometric authentication program 21 may be stored in a device connected to a public network, the Internet, a local area network (LAN), and the like and the processor 18 may read and execute the biometric authentication program 21.

Also, the first memory 15 is hardware that temporarily stores data such as the DRAM, on which the above-mentioned biometric authentication program 21 is expanded.

In addition, in this example, the feature 14 indicating the characteristic of the face captured by the camera 6 is also stored in the first memory 15. Note that, instead of storing the feature 14 and the biometric authentication program 21 in the first memory 15 in this way, a dedicated memory for storing the feature 14 may be provided.

On the other hand, the second memory 16 is a device having a read speed higher than the first memory 15. Such devices include a cache memory in the processor 18 and static RAM (SRAM). In addition, when performing collation using the feature 14, the processor 18 moves the feature 14 from the first memory 15 to the second memory 16 as described later.

The shared memory 10 is a volatile memory such as the DRAM that can be accessed for reference, deletion, or the like from the individual authentication device 3 and stores the biometric information 13 and the feature 14 of each person included in the group G.

Also, the communication unit 17 is, for example, a LAN interface. Each of the individual authentication device 3, the storage unit 5, and the camera 6 is connected to the authentication server 4 by the communication unit 17.

The processor 18 is hardware such as a central processing unit (CPU) that controls each unit of the authentication server 4 and executes the biometric authentication program 21 in cooperation with the first memory 15. Note that the biometric authentication program 21 may be executed in parallel by using the processor 18 including a plurality of cores or using a plurality of processors 18. Further, an application-specific integrated circuit (ASIC) or a field-programmable gate array (FPGA) may be used as the processor 18.

Note that, in the example of FIG. 1, a storage unit 5 is provided separately from the authentication server 4, and the biometric information database DB is stored in the storage unit 5. However, the biometric information database DB may be stored in the first memory 15 or the storage 19.

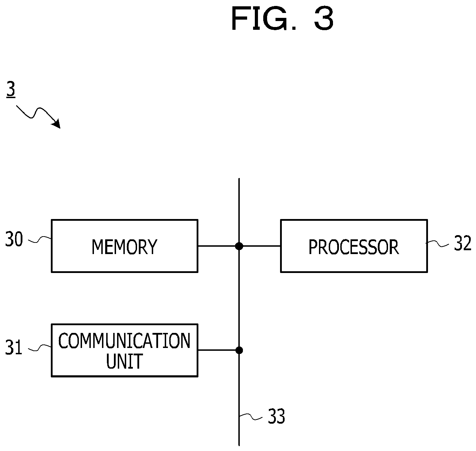

On the other hand, FIG. 3 is a hardware configuration diagram of the individual authentication device 3.

As illustrated in FIG. 3, the individual authentication device 3 includes a memory 30, a communication unit 31, and a processor 32. Each of these units are connected to each other via a bus 33.

Among these, the memory 30 is hardware that temporarily stores data such as the DRAM, on which the individual authentication program is expanded.

Also, the communication unit 31 is, for example, a LAN interface. The individual authentication device 3 is connected to the authentication server 4 by the communication unit 31.

The processor 32 is hardware such as the CPU and the like that controls each unit of the individual authentication device 3 and executes the individual authentication program in cooperation with the memory 30.

### <Functional configuration>

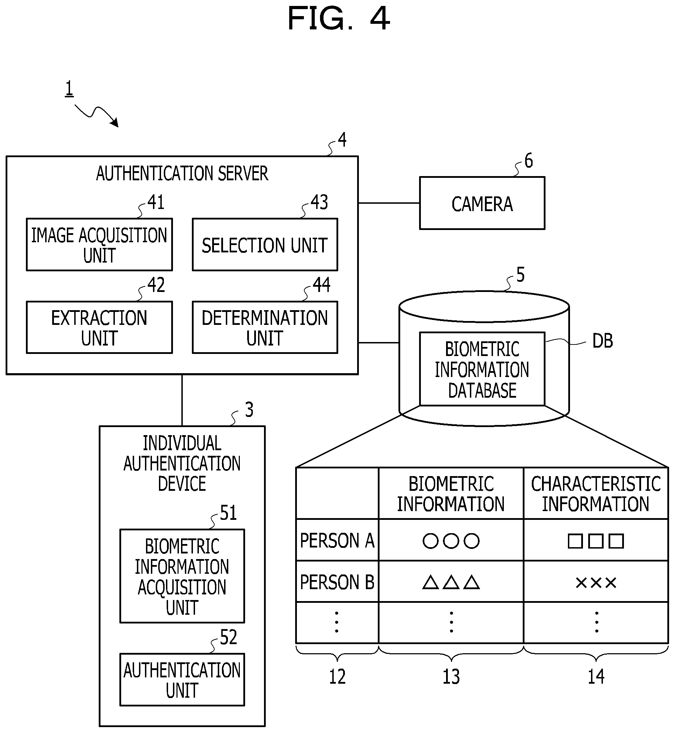

FIG. 4 is a functional configuration diagram of the biometric authentication device 1.

As illustrated in FIG. 4, the authentication server 4 can access each of the individual authentication device 3, the storage unit 5, and the camera 6.

Among these, the storage unit 5 stores the above-mentioned biometric information database DB. The biometric information database DB is a database in which all persons 12 who are permitted to perform a transaction by the operation terminal 2 are associated with the biometric information 13 and the feature 14 of the persons.

In addition, the authentication server 4 includes an image acquisition unit 41, an extraction unit 42, a selection unit 43, and a determination unit 44. Each of these units is realized by executing the biometric authentication program 21 with the collaboration of the first memory 15 and the processor 18.

Among these, the image acquisition unit 41 acquires an image that includes the head person 12a of the waiting line 11 at a constant cycle by capturing image capturing data from the camera 6. The cycle is not particularly limited, but in this example, the cycle is set to 0.3 seconds.

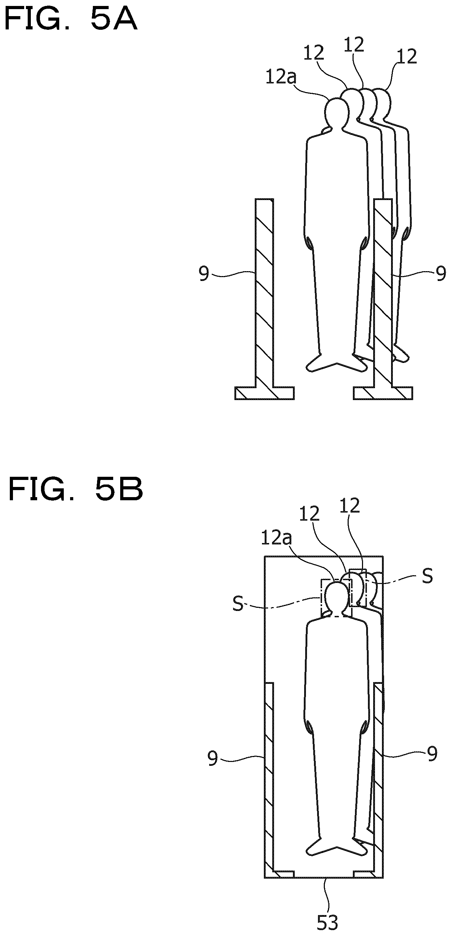

FIG. 5A is a diagram illustrating an example of the waiting line 11 seen from the camera 6.

In the example of FIG. 5A, the camera 6 captures a region between poles 9. Also, while the face of the head person 12a is completely visible, a part of the face of each person 12 behind the head person 12a is missing.

FIG. 5B is a diagram illustrating an example of an image 53 acquired by the image acquisition unit 41 in this case.

A rectangular region S in FIG. 5B is a part specified as a region in which faces of each person 12 appear by the extraction unit 42 described later searching through the image 53. Since the face of the head person 12a is completely visible from the camera 6, the rectangular region S of the head person 12a is a rectangular region that completely includes the face. On the other hand, the rectangular region S of the person 12 behind the head person 12a is a region that includes only a part of the face of the person.

In this way, when only the face of the head person 12a is completely visible, authentication is performed as described later using the image 53 that includes the head person 12a as illustrated in FIG. 5B.

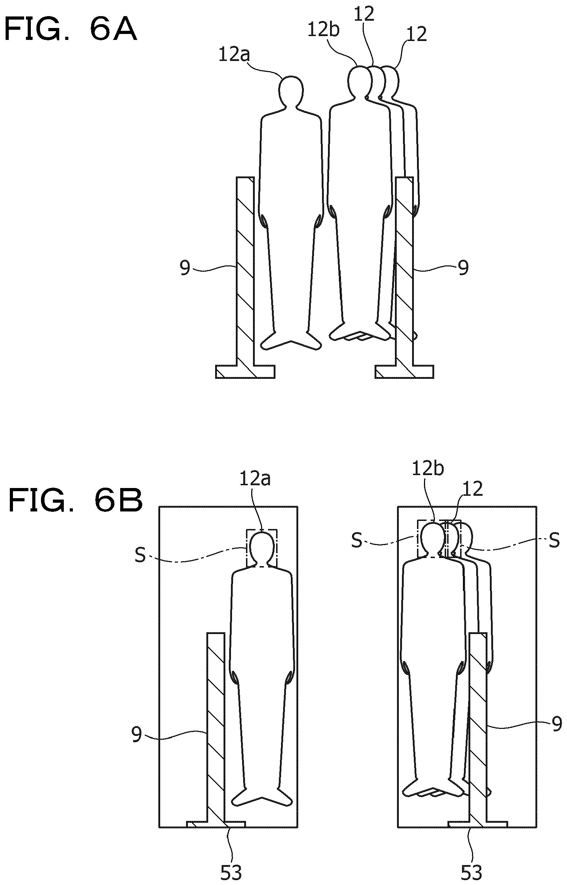

On the other hand, FIG. 6A is a diagram illustrating another example of the waiting line 11 seen from the camera 6.

In the example of FIG. 6A, the face of the second person 12b is not hidden by the head person 12a.

FIG. 6B is a diagram illustrating an example of an image 53 acquired by the image acquisition unit 41 in this case. In this way, when a plurality of faces is completely visible, there is a plurality of rectangular regions S completely including the faces. In this case, a plurality of images 53 that includes each of the rectangular regions S is generated, and authentication is performed using these images 53 as described later.

Refer to FIG. 4 again.

The extraction unit 42 searches for the face of the head person 12a in the image 53 acquired by the image acquisition unit 41. When the face can be detected, the extraction unit 42 extracts the feature 14 of the face. Such feature 14 includes, for example, landmark information indicating the mutual positional relationship among the eyes, nose, and mouth.

When the face of the person 12 other than the head person 12a is incompletely captured as in FIG. 5B described above, the extraction unit 42 determines that the feature 14 of the person other than the head person 12a is incomplete. Therefore, in this case, only the feature 14 of the head person 12a is extracted by the extraction unit 42.

On the other hand, when the faces of both the head person 12a and the second person 12b are completely captured as in FIG. 6B described above, the extraction unit 42 extracts the feature 14 of both the head person 12a and the second person 12b.

The selection unit 43 collates the feature 14 extracted by the extraction unit 42 with the feature 14 in the biometric information database DB. As a result, the selection unit 43 selects the group G of persons whose faces are similar to the head person 12a among a plurality of persons included in the biometric information database DB.

The determination unit 44 determines that the head person 12a has been replaced by another person when the feature 14 of the head person 12a extracted by the extraction unit 42 has changed.

In addition, the individual authentication device 3 includes a biometric information acquisition unit 51 and an authentication unit 52.

Each of these units is realized by executing the individual authentication program described above with the collaboration of the processor 32 and the memory 30.

Among these, the biometric information acquisition unit 51 acquires the biometric information 13 of the head person 12a from the biometric sensor 7. As described above, the biometric sensor 7 is a vein sensor. In this case, characteristics of a vein pattern of the palm are acquired by the biometric information acquisition unit 51 as the biometric information 13.

In addition, the authentication unit 52 authenticates the head person by collating the biometric information 13 of each person included in the group G with the biometric information 13 of the head person 12a acquired by the biometric information acquisition unit 51.

### <Biometric authentication method>

Next, a biometric authentication method according to the present embodiment will be described.

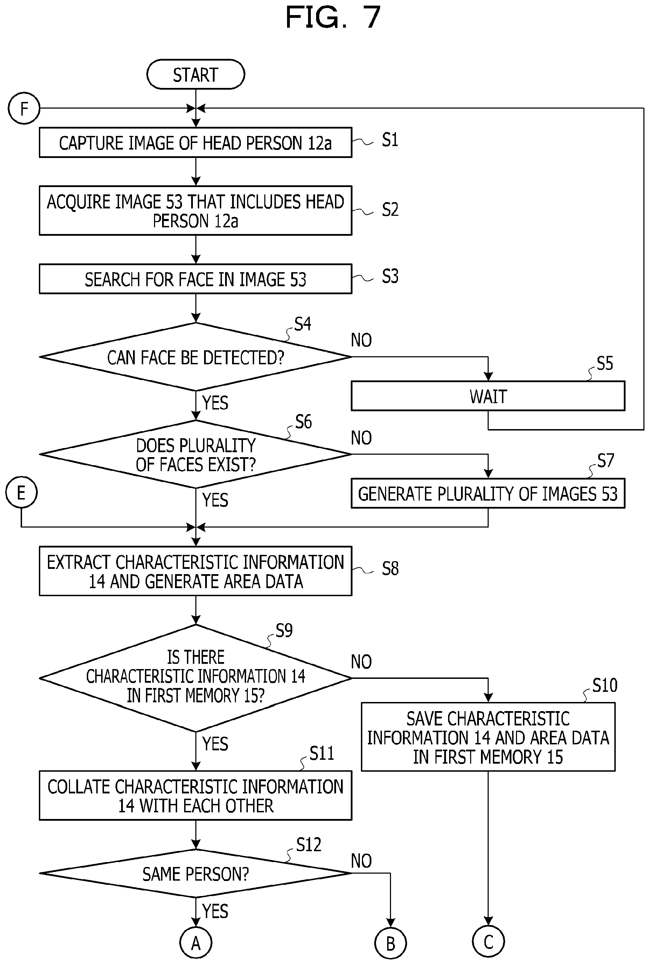

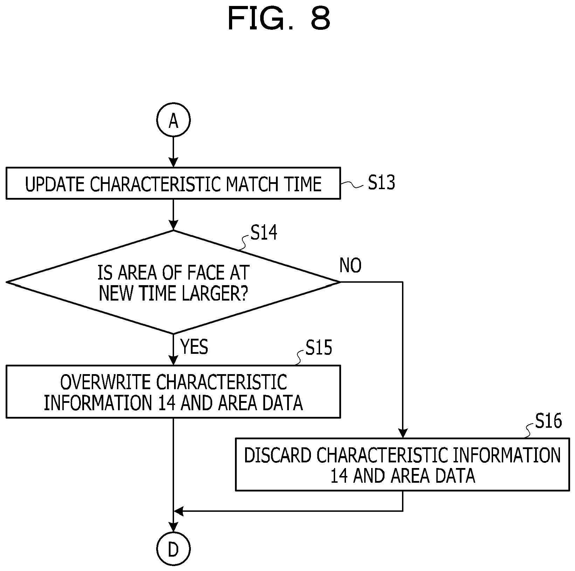

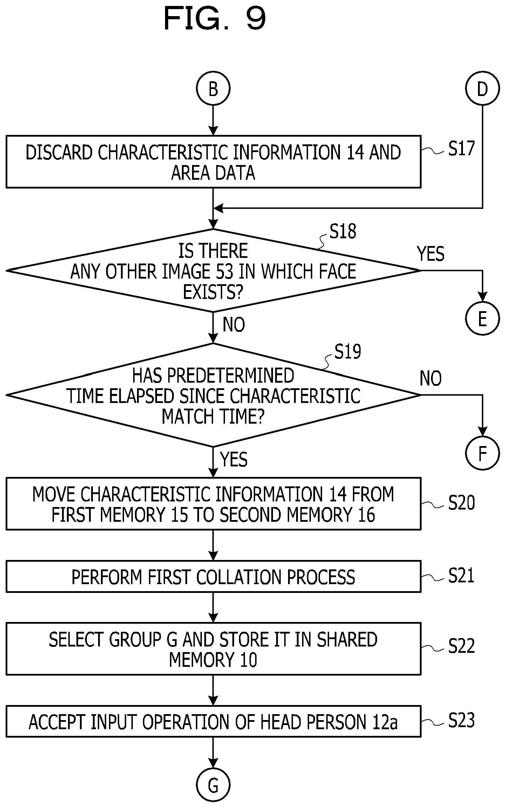

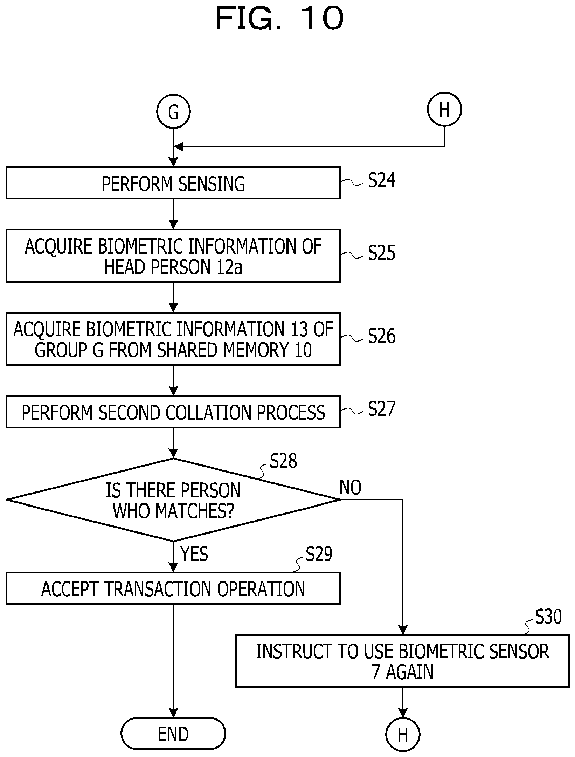

FIGS. 7 to 10 are flowcharts illustrating the biometric authentication method according to the present embodiment.

First, in step S1, the camera 6 captures an image 53 (refer to FIGS. 4B and 5B) that includes the head person 12a.

Next, the process proceeds to step S2, and the image acquisition unit 41 acquires the image 53.

Next, the process proceeds to step S3, and the extraction unit 42 searches for the face of the head person 12a in the image 53.

Then, the process proceeds to step S4, and the extraction unit 42 determines whether or not the face can be detected.

Here, when it is determined that the face cannot be detected (NO), the process proceeds to step S5 and waits until the image 53 that includes the face of the head person 12a can be acquired.

On the other hand, when it is determined that the face can be detected (YES) in step S4, the process proceeds to step S6.

In step S6, the extraction unit 42 determines whether or not a plurality of faces exists in the image 53. For example, the extraction unit 42 determines that a plurality of faces does not exist when a part of the face of each person 12 behind the head person 12a is missing as illustrated in FIG. 5B. On the other hand, when the face of the person behind the head person 12a is not hidden as illustrated in FIG. 6B, the extraction unit 42 determines that a plurality of faces exists.

Here, when it is determined that a plurality of faces exists (YES), the process proceeds to step S7.

In step S7, as illustrated in FIG. 6B, the image captured by the camera 6 is cut out to generate a plurality of images 53, and the faces of each person 12 are to be included in each of them. Then, each of the subsequent processes is performed on the plurality of images 53.

On the other hand, when it is determined that a plurality of faces do not exist (NO), the process proceeds to step S8.

In step S8, the extraction unit 42 specifies the rectangular region S in which the face of the person 12 appears in the image 53. Then, the extraction unit 42 extracts the landmark information indicating the mutual positional relationship among the eyes, nose, and mouth as the feature 14 of the face included in the rectangular region S. At the same time, the extraction unit 42 generates area data indicating an area of the face included in the image 53.

Next, the process proceeds to step S9, and the determination unit 44 determines whether or not there is the feature 14 in the first memory 15.

Here, when it is determined that there is no feature 14 (NO), the process proceeds to step S10.

In step S10, the determination unit 44 newly saves the feature 14 extracted in step S8 and the area data in the first memory 15. In the present embodiment, the feature 14 is updated as needed as described later, and when a predetermined time has elapsed after the latest feature 14 does not match the immediately preceding feature 14, it is determined that the head person 12a has started walking toward the operation terminal 2.

In order to enable such a determination, the time when the latest feature 14 matches the immediately preceding feature 14 is saved in the first memory 15 as characteristic match time. Note that, when the feature 14 is newly saved in the first memory 15 as in step S10, the time of saving is stored as the characteristic match time.

On the other hand, in step S9, when it is determined that there is the feature 14 (YES), the process proceeds to step S11.

In step S11, the determination unit 44 collates the feature 14 currently saved in the first memory 15 with the feature 14 newly extracted in step S8.

Here, when the collation fails, it is highly possible that the head person 12a has been replaced by another person.

Therefore, in the next step S12, the determination unit 44 determines whether or not the head person 12a is the same person based on the collation result in step S11. For example, when the collation in step S11 succeeds, the determination unit 44 determines that the head person is the same person because there is no change in the feature 14 of the head person 12a. On the other hand, when the collation fails, since it means that the feature 14 of the head person 12a has changed, the determination unit 44 determines that the head person 12a is not the same person.

Here, when it is determined as the feature 14 of the same person (YES), the process proceeds to step S13.

In step S13, the characteristic match time described above is updated to the current time.

Next, the process proceeds to step S14, and the extraction unit 42 determines whether or not the area of the face at a new time is larger than that at an old time among the images 53 acquired at different times. The determination is performed by the extraction unit 42 comparing the area data generated in step S8 with the area data currently saved in the first memory 15.

Here, when it is determined that the area of the face at the new time is larger than that at the old time (YES), the process proceeds to step S15.

In that step S15, the extraction unit 42 overwrites the feature 14 and the area data extracted in step S8 in the first memory 15. As a result, the feature 14 is to be updated to the information at the new time.

In addition, the larger the area of the face in the image 53, the higher the reliability of the feature 14 obtained from the image 53. Therefore, by updating the feature 14 when the area of the face is large in this way, the reliability of the feature 14 in the first memory 15 can be improved.

On the other hand, when it is determined in step S14 that the area of the face at the new time is not larger than that at the old time (NO), the process proceeds to step S16.

In step S16, the feature 14 and the area data extracted in step S8 are discarded.

In addition, when it is determined in step S12 described above as not the feature 14 of the same person (NO), the process proceeds to step S17.

In that step S17, the determination unit 44 determines that the feature 14 and the area data extracted in step S8 do not belong to the head person 12a and discards these feature 14 and the area data.

Next, the process proceeds to step S18, and the determination unit 44 determines whether or not there is any other image 53 in which a face exists as illustrated in FIG. 6B.

Here, when it is determined that there is another image 53 (YES), step S8 described above is performed on the image 53.

On the other hand, when it is determined that there is no other image 53 (NO), the process proceeds to step S19.

In step S19, the determination unit 44 determines whether or not, at the current time, a predetermined time has elapsed since the characteristic match time. The predetermined time that serves as a criterion for the determination is a time that serves as a guide for determining whether or not the head person 12a has started walking toward the operation terminal 2. When approximately two seconds have elapsed since the feature 14 did not match, it is considered that the head person 12a has started walking. Therefore, in the present embodiment, the predetermined time is set to two seconds.

Here, when it is determined that the predetermined time has not elapsed (NO), the process returns to step S1 described above.

On the other hand, when it is determined that the predetermined time has elapsed (YES), the process proceeds to step S20.

In step S20, the extraction unit 42 moves the feature 14 stored in the first memory 15 to the second memory 16 and deletes the feature 14 from the first memory 15.

Next, the process proceeds to step S21, and the selection unit 43 performs a first collation process for collating the feature 14 stored in the second memory 16 with the feature 14 in the biometric information database DB. By this first collation process, the person whose face is similar to the head person 12a is narrowed down among the plurality of persons included in the biometric information database DB.

Note that, in this first collation process, candidates are narrowed down to approximately 1% to 0.1% of the total number of persons registered in the biometric information database DB. Since the purpose is to search for the said person with high accuracy, the erroneous collation rate in the collation process may be set looser than the set value used in generic biometric authentication. For example, it may be approximately 1/100 or 1/1000. As a result, when the number of all persons registered in the biometric information database DB is 10 million, that all persons are narrowed down to approximately 100,000 to 10,000 persons as to be those similar to the head person 12a.

In addition, by moving the feature 14 in advance to the second memory 16 whose read speed is higher than that of the first memory 15 as in this example, the first collation process can be performed at high speed.

Next, the process proceeds to step S22, and the selection unit 43 selects the group G of the persons whose faces are similar to the head person 12a in step S21 among all the persons registered in the biometric information database DB. Then, the selection unit 43 acquires the biometric information 13 of each person in the group G from the database DB and stores it in the shared memory 10.

Subsequently, the process proceeds to step S23, the head person 12a arrives at a vacant operation terminal 2 among a plurality of operation terminals 2, and the operation terminal 2 accepts an input operation by the head person 12a. For example, the operation terminal 2 accepts an input operation by the head person 12a via a touch panel (not illustrated in the drawings) provided in the own device.

Next, the process proceeds to step S24, and the head person 12a holds his/her palm over the biometric sensor 7. Then, the biometric sensor 7 senses the palm and acquires a vein pattern of the palm as the biometric information 13 of the head person 12a.

Next, the process proceeds to step S25, and the biometric information acquisition unit 51 of the individual authentication device 3 acquires the biometric information 13 acquired by the biometric sensor 7.

Subsequently, the process proceeds to step S26, and the authentication unit 52 acquires the biometric information 13 of each person included in the group G from the shared memory 10.

Next, the process proceeds to step S27, and the authentication unit 52 performs a second collation process for collating the biometric information 13 of each person in group G acquired in step S26 with the biometric information 13 of the head person 12a acquired by the biometric information acquisition unit 51 in step S25. The erroneous collation rate in that second collation process is set to a value stricter than the erroneous collation rate in the first collation process (step S21), for example, approximately 1/100,000 to 1/10 million.

In this second collation process, it is not required to perform the collation using the biometric information 13 of all persons included in the database DB, and the processor 18 may just refer to the biometric information 13 of only group G which is a part of all persons and perform the collation. Therefore, the execution time for the processor 18 to execute the biometric authentication program 21 can be shortened.

Moreover, in order to perform the collation, it is just required to store the biometric information 13 of the group G only in the shared memory 10 in step S22. Therefore, the memory usage of the shared memory 10 can be reduced as compared with the case that all the biometric information 13 of the biometric information database DB is stored in the shared memory 10.

By making it possible to shorten the execution time of the biometric authentication program 21 and reduce the memory usage in this way, the function of the authentication server 4 as a computer can be improved in the present embodiment.

Next, the process proceeds to step S28, and the authentication unit 52 authenticates the head person 12a by determining whether or not there is a person in the group G who matches the biometric information 13 of the head person 12a.

Here, when it is determined that there is a person who matches (YES), it means that the authentication has succeeded. Therefore, in this case, the process proceeds to step S29, and the operation terminal 2 accepts a transaction operation by the head person 12a.

On the other hand, in step S28, when it is determined that there is no person who matches (NO), it means that the authentication has failed. In this case, the process proceeds to step S30, the operation terminal 2 instructs the head person 12a to use the biometric sensor 7 again, and the process restarts from step S24.

The above description completes the fundamental steps of the authentication method according to the present embodiment.

According to the present embodiment described above, the group G of faces similar to the head person 12a is selected in advance in the first collation process (step S21), and the collation is performed by using only the biometric information 13 of the person who belongs to the group G in the second collation process (step S27). Therefore, it is not required to collate all the persons included in the biometric information database DB in the second collation process (step S27), and the collation can be performed in a short time.

Moreover, since the erroneous collation rate in the second collation process is set to be smaller than that in the first collation process, the probability that the head person 12a can be specified among the group G in the second collation process can be increased.

Although the present embodiment has been described in detail above, the present embodiment is not limited to the above. For example, in the above, the vein sensor is provided as the biometric sensor 7, but a camera for acquiring a face image, a camera for iris authentication, or a fingerprint sensor may be provided as the biometric sensor 7. In that case, in the second collation process of step S27, collation using the feature of the face image, collation of the iris, collation of the fingerprint, or the like may be performed.

## Claims

1. A biometric authentication device (1), comprising:
an image acquisition unit (41) configured to acquire an image that includes a face of one or more persons;
an extraction unit (42) configured to specify a region from the acquired image in which a face of a head person of a waiting line in which the one or more persons line up appears, and to extract a feature of the face of the head person included in the specified region;
a storage unit (5) configured to store, for each of a plurality of persons, a feature that indicates facial characteristics of the person and biometric information of the person acquired using a biometric sensor;
a selection unit (43) configured to select a group of persons similar to the head person among the plurality of persons by a first collation process of collating, for each of the plurality of persons, the extracted feature with the stored feature that indicates facial characteristics of the person;
a biometric information acquisition unit (51) configured to acquire the biometric information of the head person using a biometric sensor; and
an authentication unit (52) configured to authenticate the head person by performing a second collation process of collating the biometric information stored in the storage unit (5) of each person included in the group with the acquired biometric information of the head person and by determining whether or not the acquired biometric information matches the stored biometric information of a person in the group,
wherein the extraction unit (42) is configured to update the extracted feature to a feature extracted from a second image acquired after the image, in a case where an area of a face in the second image is larger than an area of a face in the image, and to discard the feature and area data extracted from the second image, in a case where the area of the face in the second image is not larger than the area of the face in the image.

2. The biometric authentication device (1) according to claim 1, further comprising a determination unit (44) configured to determine that the head person has been replaced when it is determined that the extracted feature of the head person has changed between the image and a second image acquired after the image.

3. The biometric authentication device (1) according to claim 2, wherein the selection unit (43) is configured to perform the first collation process after a predetermined time has elapsed after it is determined that the head person has been replaced.

4. The biometric authentication device (1) according to claim 3, further comprising:
a first memory configured to store the extracted feature; and
a second memory that has a read speed higher than the first memory, wherein
after the predetermined time has elapsed, the extraction unit (42) is configured to move the feature stored in the first memory to the second memory, and
in the first collation process, the selection unit (43) is configured to collate the feature moved to the second memory with the feature stored in the storage unit (5) .

5. The biometric authentication device (1) according to claim 1, wherein an error rate of the second collation process is smaller than an error rate of the first collation process.

6. A biometric authentication method executed by a computer, comprising processing of:
acquiring an image that includes a face of one or more persons;
specifying a region from the acquired image in which a face of a head person of a waiting line in which the one or more persons line up appears, and extracting a feature of the face of the head person included in the specified region;
storing in a storage unit (5), for each of a plurality of persons, a feature that indicates facial characteristics of the person and biometric information of the person acquired using a biometric sensor;
selecting a group of persons similar to the head person among the plurality of persons by a first collation process of collating, for each of the plurality of persons, the extracted feature with the stored feature that indicates facial characteristics of the person;
acquiring the biometric information of the head person using a biometric sensor; and
authenticating the head person by performing a second collation process of collating the biometric information stored in the storage unit (5) of each person included in the group with the acquired biometric information of the head person and by determining whether or not the acquired biometric information matches the stored biometric information of a person in the group,
wherein the extracted feature is updated to a feature extracted from a second image acquired after the image, in a case where an area of a face in the second image is larger than an area of a face in the image, and the feature and area data extracted from the second image are discarded, in a case where the area of the face in the second image is not larger than the area of the face in the image.

7. A biometric authentication program for causing a computer to execute processing of:
acquiring an image that includes a face of one or more persons;
specifying a region from the acquired image in which a face of a head person of a waiting line in which the one or more persons line up appears, and extracting a feature of the face of the head person included in the specified region;
storing in a storage unit (5), for each of a plurality of persons, a feature that indicates facial characteristics of the person and biometric information of the person acquired using a biometric sensor;
selecting a group of persons similar to the head person among the plurality of persons by a first collation process of collating, for each of the plurality of persons, the extracted feature with the stored feature that indicates facial characteristics of the person;
acquiring the biometric information of the head person using a biometric sensor; and
authenticating the head person by performing a second collation process of collating the biometric information stored in the storage unit (5) of each person included in the group with the acquired biometric information of the head person and by determining whether or not the acquired biometric information matches the stored biometric information of a person in the group,
wherein the extracted feature is updated to a feature extracted from a second image acquired after the image, in a case where an area of a face in the second image is larger than an area of a face in the image, and the feature and area data extracted from the second image are discarded, in a case where the area of the face in the second image is not larger than the area of the face in the image.

## Patentansprüche

1. Vorrichtung zur biometrischen Authentifizierung (1), umfassend:
eine Bilderfassungseinheit (41), die konfiguriert ist, ein Bild zu erfassen, das ein Gesicht einer oder mehrerer Personen enthält;
eine Extraktionseinheit (42), die konfiguriert ist, einen Bereich aus dem erfassten Bild zu spezifizieren, in dem ein Gesicht einer führenden Person einer Warteschlange erscheint, in der sich die eine oder mehreren Personen anstellen, und ein Merkmal des Gesichts der führenden Person zu extrahieren, die im spezifizierten Bereich enthalten ist;
eine Speichereinheit (5), die konfiguriert ist, für jede einer Vielzahl von Personen ein Merkmal zu speichern, das Gesichtszüge der Person und biometrische Informationen der Person angibt, die unter Verwendung eines biometrischen Sensors erfasst werden;
eine Auswahleinheit (43), die konfiguriert ist, durch einen Prozess einer ersten Zusammenführung, für jede der Vielzahl von Personen, des extrahierten Merkmals mit dem gespeicherten Merkmal, das Gesichtszüge der Person angibt, eine Gruppe von Personen, die der führenden Person ähnlich sind, aus der Vielzahl von Personen auszuwählen;
eine Erfassungseinheit biometrischer Informationen (51), die konfiguriert ist, biometrische Informationen der führenden Person unter Verwendung eines biometrischen Sensors zu erfassen; und
eine Authentifizierungseinheit (52), die konfiguriert ist, die führende Person durch Durchführen eines Prozesses einer zweiten Zusammenführung der in der Speichereinheit (5) gespeicherten biometrischen Informationen jeder in der Gruppe enthaltenen Person mit den erfassten biometrischen Informationen der führenden Person und durch Bestimmen, ob die erfassten biometrischen Informationen mit den gespeicherten biometrischen Informationen einer Person in der Gruppe übereinstimmen oder nicht, zu authentifizieren,
wobei die Extraktionseinheit (42) konfiguriert ist, das extrahierte Merkmal zu einem Merkmal zu aktualisieren, das aus einem zweiten Bild extrahiert wird, das nach dem Bild erfasst wird, falls ein Bereich eines Gesichts im zweiten Bild größer ist als ein Bereich eines Gesichts im Bild, und die aus dem zweiten Bild extrahierten Merkmals- und Bereichsdaten zu verwerfen, falls der Bereich des Gesichts im zweiten Bild nicht größer ist als der Bereich des Gesichts im Bild.

2. Vorrichtung zur biometrischen Authentifizierung (1) nach Anspruch 1, weiter umfassend eine Bestimmungseinheit (44), die konfiguriert ist, zu bestimmen, dass die führende Person ausgewechselt wurde, wenn bestimmt wird, dass sich das extrahierte Merkmal der führenden Person zwischen dem Bild und einem zweiten Bild, das nach dem Bild erfasst wurde, geändert hat.

3. Vorrichtung zur biometrischen Authentifizierung (1) nach Anspruch 2, wobei die Auwahleinheit (43) konfiguriert ist, den Prozess der ersten Zusammenführung durchzuführen, nachdem eine vorbestimmte Zeit verstrichen ist, nachdem bestimmt wurde, dass die führende Person ausgewechselt wurde.

4. Vorrichtung zur biometrischen Authentifizierung (1) nach Anspruch 3, weiter umfassend:
einen ersten Speicher, der konfiguriert ist, das extrahierte Merkmal zu speichern; und
einen zweiten Speicher, der eine höhere Lesegeschwindigkeit aufweist als der erste Speicher; wobei
die Extraktionseinheit (42), nachdem die vorbestimmte Zeit verstrichen ist, konfiguriert ist, das im ersten Speicher gespeicherte Merkmal in den zweiten Speicher zu verschieben, und
die Auswahleinheit (43) im Prozess der ersten Zusammenführung konfiguriert ist, das in den zweiten Speicher verschobene Merkmal mit dem in der Speichereinheit (5) gespeicherten Merkmal zusammenzuführen.

5. Vorrichtung zur biometrischen Authentifizierung (1) nach Anspruch 1, wobei eine Fehlerrate des Prozesses der zweiten Zusammenführung kleiner ist als eine Fehlerrate des Prozesses der ersten Zusammenführung.

6. Verfahren zur biometrischen Authentifizierung, das von einem Computer ausgeführt wird, umfassend Verarbeiten von Folgendem:
Erfassen eines Bildes, das ein Gesicht einer oder mehrerer Personen enthält;
Spezifizieren eines Bereichs aus dem erfassten Bild, in dem ein Gesicht einer führenden Person einer Warteschlange erscheint, in der sich die eine oder mehrere Personen anstellen, und Extrahieren eines Merkmals des Gesichts der führenden Person, die im spezifizierten Bereich enthalten ist;
Speichern, in einer Speichereinheit (5), für jede einer Vielzahl von Personen, eines Merkmals, das Gesichtszüge der Person und biometrische Informationen der Person angibt, die unter Verwendung eines biometrischen Sensors erfasst werden;
Auswählen einer Gruppe von Personen, die der führenden Person ähnlich sind, aus der Vielzahl von Personen durch einen Prozess einer ersten Zusammenführung, für jede der Vielzahl von Personen, des extrahierten Merkmals mit dem gespeicherten Merkmal, das Gesichtszüge der Person angibt;
Erfassen der biometrischen Informationen der führenden Person unter Verwendung eines biometrischen Sensors; und
Authentifizieren der führenden Person durch Durchführen eines Prozesses einer zweiten Zusammenführung der in der Speichereinheit (5) gespeicherten biometrischen Informationen jeder in der Gruppe enthaltenen Person mit den erfassten biometrischen Informationen der führenden Person und durch Bestimmen, ob die erfassten biometrischen Informationen mit den gespeicherten biometrischen Informationen einer Person in der Gruppe übereinstimmen oder nicht,
wobei das extrahierte Merkmal zu einem Merkmal aktualisiert wird, das aus einem zweiten Bild extrahiert wird, das nach dem Bild erfasst wird, falls ein Bereich eines Gesichts im zweiten Bild größer ist als ein Bereich eines Gesichts im Bild, und die aus dem zweiten Bild extrahierten Merkmals- und Bereichsdaten verworfen werden, falls der Bereich des Gesichts im zweiten Bild nicht größer ist als der Bereich des Gesichts im Bild.

7. Programm zur biometrischen Authentifizierung, um einen Computer zu veranlassen, Verarbeiten von Folgendem auszuführen:
Erfassen eines Bildes, das ein Gesicht einer oder mehrerer Personen enthält;
Spezifizieren eines Bereichs aus dem erfassten Bild, in dem ein Gesicht einer führenden Person einer Warteschlange erscheint, in der sich die eine oder mehrere Personen anstellen, und Extrahieren eines Merkmals des Gesichts der führenden Person, die im spezifizierten Bereich enthalten ist;
Speichern, in einer Speichereinheit (5), für jede einer Vielzahl von Personen, eines Merkmals, das Gesichtszüge der Person und biometrische Informationen der Person angibt, die unter Verwendung eines biometrischen Sensors erfasst werden;
Auswählen einer Gruppe von Personen, die der führenden Person ähnlich sind, aus der Vielzahl von Personen durch einen Prozess einer ersten Zusammenführung, für jede der Vielzahl von Personen, des extrahierten Merkmals mit dem gespeicherten Merkmal, das Gesichtszüge der Person angibt;
Erfassen der biometrischen Informationen der führenden Person unter Verwendung eines biometrischen Sensors; und
Authentifizieren der führenden Person durch Durchführen eines Prozesses einer zweiten Zusammenführung der in der Speichereinheit (5) gespeicherten biometrischen Informationen jeder in der Gruppe enthaltenen Person mit den erfassten biometrischen Informationen der führenden Person und durch Bestimmen, ob die erfassten biometrischen Informationen mit den gespeicherten biometrischen Informationen einer Person in der Gruppe übereinstimmen oder nicht,
wobei das extrahierte Merkmal zu einem Merkmal aktualisiert wird, das aus einem zweiten Bild extrahiert wird, das nach dem Bild erfasst wird, falls ein Bereich eines Gesichts im zweiten Bild größer ist als ein Bereich eines Gesichts im Bild, und die aus dem zweiten Bild extrahierten Merkmals- und Bereichsdaten verworfen werden, falls der Bereich des Gesichts im zweiten Bild nicht größer ist als der Bereich des Gesichts im Bild.

## Revendications

1. Dispositif d'authentification biométrique (1) comprenant :
une unité d'acquisition d'image (41) configurée pour acquérir une image qui inclut un visage d'une ou plusieurs personnes ;
une unité d'extraction (42) configurée pour spécifier une région à partir de l'image acquise dans laquelle apparaît un visage d'une personne à l'avant d'une file d'attente dans laquelle les une ou plusieurs personnes sont alignées, et pour extraire une caractéristique du visage de la personne à l'avant incluse dans la région spécifiée ;
une unité de stockage (5) configurée pour stocker, pour chacune d'une pluralité de personnes, une caractéristique qui indique des caractéristiques faciales de la personne et des informations biométriques de la personne acquises à l'aide d'un capteur biométrique ;
une unité de sélection (43) configurée pour sélectionner un groupe de personnes similaires à la personne à l'avant parmi la pluralité de personnes au moyen d'un premier processus de comparaison consistant à comparer, pour chacune de la pluralité de personnes, la caractéristique extraite à la caractéristique stockée qui indique des caractéristiques faciales de la personne ;
une unité d'acquisition d'informations biométriques (51) configurée pour acquérir les informations biométriques de la personne à l'avant à l'aide d'un capteur biométrique ; et
une unité d'authentification (52) configurée pour authentifier la personne à l'avant en réalisant un second processus de comparaison consistant à comparer les informations biométriques stockées dans l'unité de stockage (5) de chaque personne incluse dans le groupe aux informations biométriques acquises de la personne à l'avant et en déterminant si les informations biométriques acquises correspondent ou non aux informations biométriques stockées d'une personne dans le groupe,
dans lequel l'unité d'extraction (42) est configurée pour actualiser la caractéristique extraite en une caractéristique extraite d'une seconde image acquise après l'image, dans un cas où une zone d'un visage sur la seconde image est plus grande qu'une zone d'un visage sur l'image, et pour supprimer la caractéristique et les données de zone extraites de la seconde image, dans un cas où la zone du visage sur la seconde image n'est pas plus grande que la zone du visage sur l'image.

2. Dispositif d'authentification biométrique (1) selon la revendication 1, comprenant en outre une unité de détermination (44) configurée pour déterminer que la personne à l'avant a été remplacée lorsqu'il est déterminé que la caractéristique extraite de la personne à l'avant a changé entre l'image et une seconde image acquise après l'image.

3. Dispositif d'authentification biométrique (1) selon la revendication 2, dans lequel l'unité de sélection (43) est configurée pour réaliser le premier processus de comparaison après qu'un temps prédéterminé s'est écoulé après qu'il est déterminé que la personne à l'avant a été remplacée.

4. Dispositif d'authentification biométrique (1) selon la revendication 3, comprenant en outre :
une première mémoire configurée pour stocker la caractéristique extraite ; et
une seconde mémoire qui présente une vitesse de lecture supérieure à la première mémoire, dans lequel
après que le temps prédéterminé s'est écoulé, l'unité d'extraction (42) est configurée pour déplacer la caractéristique stockée dans la première mémoire vers la seconde mémoire, et
dans le premier processus de comparaison, l'unité de sélection (43) est configurée pour comparer la caractéristique déplacée vers la seconde mémoire à la caractéristique stockée dans l'unité de stockage (5).

5. Dispositif d'authentification biométrique (1) selon la revendication 1, dans lequel un taux d'erreurs du second processus de comparaison est inférieur à un taux d'erreurs du premier processus de comparaison.

6. Procédé d'authentification biométrique exécuté par un ordinateur, comprenant le traitement suivant :
acquisition d'une image qui inclut un visage d'une ou plusieurs personnes ;
spécification d'une région à partir de l'image acquise dans laquelle apparaît un visage d'une personne à l'avant d'une file d'attente dans laquelle les une ou plusieurs personnes s'alignent, et extraction d'une caractéristique du visage de la personne à l'avant incluse dans la région spécifiée ;
stockage dans une unité de stockage (5), pour chacune d'une pluralité de personnes, d'une caractéristique qui indique des caractéristiques faciales de la personne et des informations biométriques de la personne acquises à l'aide d'un capteur biométrique ;
sélection d'un groupe de personnes similaires à la personne à l'avant parmi la pluralité de personnes au moyen d'un premier processus de comparaison consistant à comparer, pour chacune de la pluralité de personnes, la caractéristique extraite à la caractéristique stockée qui indique des caractéristiques faciales de la personne ;
acquisition des informations biométriques de la personne à l'avant à l'aide d'un capteur biométrique ; et
authentification de la personne à l'avant en réalisant un second processus de comparaison consistant à comparer les informations biométriques stockées dans l'unité de stockage (5) de chaque personne incluse dans le groupe aux informations biométriques acquises de la personne à l'avant et en déterminant si les informations biométriques acquises correspondent ou non aux informations biométriques stockées d'une personne dans le groupe,
dans lequel la caractéristique extraite est actualisée en une caractéristique extraite d'une seconde image acquise après l'image, dans un cas où une zone d'un visage sur la seconde image est plus grande qu'une zone d'un visage sur l'image, et la caractéristique et les données de zone extraites de la seconde image sont supprimées, dans un cas où la zone du visage sur la seconde image n'est pas plus grande que la zone du visage sur l'image.

7. Programme d'authentification biométrique pour amener un ordinateur à exécuter le traitement suivant :
acquisition d'une image qui inclut un visage d'une ou plusieurs personnes ;
spécification d'une région à partir de l'image acquise dans laquelle apparaît un visage d'une personne à l'avant d'une file d'attente dans laquelle les une ou plusieurs personnes s'alignent, et extraction d'une caractéristique du visage de la personne à l'avant incluse dans la région spécifiée ;
stockage dans une unité de stockage (5), pour chacune d'une pluralité de personnes, d'une caractéristique qui indique des caractéristiques faciales de la personne et des informations biométriques de la personne acquises à l'aide d'un capteur biométrique ;
sélection d'un groupe de personnes similaires à la personne à l'avant parmi la pluralité de personnes au moyen d'un premier processus de comparaison consistant à comparer, pour chacune de la pluralité de personnes, la caractéristique extraite à la caractéristique stockée qui indique des caractéristiques faciales de la personne ;
acquisition des informations biométriques de la personne à l'avant à l'aide d'un capteur biométrique ; et
authentification de la personne à l'avant en réalisant un second processus de comparaison consistant à comparer les informations biométriques stockées dans l'unité de stockage (5) de chaque personne incluse dans le groupe aux informations biométriques acquises de la personne à l'avant et en déterminant si les informations biométriques acquises correspondent ou non aux informations biométriques stockées d'une personne dans le groupe,
dans lequel la caractéristique extraite est actualisée en une caractéristique extraite d'une seconde image acquise après l'image, dans un cas où une zone d'un visage sur la seconde image est plus grande qu'une zone d'un visage sur l'image, et la caractéristique et les données de zone extraites de la seconde image sont supprimées, dans un cas où la zone du visage sur la seconde image n'est pas plus grande que la zone du visage sur l'image.
